# EUROPEAN PATENT SPECIFICATION

(11) **EP 3 834 620 B1**
(45) Date of publication and mention of the grant of the patent: **14.05.2025**
(21) Application number: 18929735.1
(22) Date of filing: 10.08.2018
(51) Int. Cl.: A23F 5/24, A23C 9/152

(54) **COFFEE MILK DRINK COMPOSITION**
ZUSAMMENSETZUNG EINES KAFFEE-MILCH-GETRÄNKS
COMPOSITION DE BOISSON LACTÉE AU CAFÉ

(43) Date of publication of application: 16.06.2021
(73) Proprietor: Samyang Corporation, Seoul 03129 (KR)
(72) Inventor: LIM, Hye Jin, Suwon-si Gyeonggi-do 16506 (KR); KIM, Bong Chan, Seoul 01709 (KR); KIM, Yong-In, Yongin-si Gyeonggi-do 16868 (KR); SEO, Il, Gwangju-si, Gyeonggi-do 12784 (KR); LEE, Seung Mi, Hwaseong-si, Gyeonggi-do 18477 (KR); HAN, Tae-Chul, Hwaseong-si, Gyeonggi-do 18496 (KR); LIM, Su Youn, Seoul 08848 (KR)
(74) Representative: Schön, Christoph
(86) International application number: PCT/KR2018/009202
(87) International publication number: WO 2020/032303

(56) References cited:
- WO-A1-2008/102892
- JP-A- 2014 036 645
- JP-A- 2014 113 059
- JP-A- 2014 113 059
- JP-A- 2014 187 928
- JP-A- 2015 136 309
- JP-A- 2015 136 309
- JP-A- 2016 106 606
- JP-A- 2016 106 606
- KR-A- 20150 127 155
- KR-A- 20180 047 895
- US-A1- 2016 302 463

## Description

### [Technical field]

The present invention is a coffee milk beverage composition containing allulose and a manufacturing method as defined in the appended claims, which can provide a low-calorie beverage by using allulose, and in particular, can be used in beverages with high manufacturing stability.

### [Related Art]

Recently, as the national dietary life has become westernized, the consumption of favorite food and beverages has increased significantly. In particular, the frequency of drinking coffee or coffee milk has increased compared to the past, so the conventional canned coffee is not only used in a coffee beverage market in, but also in various containers such as bottles, cups, and packs. The coffee market is rapidly growing with premium type of espresso.

However, commercially available beverages contain a large amount of sugar, and there is a problem that may cause adult diseases such as dental caries, obesity and diabetes, when consumed in excess. For the health of people, the government is also encouraging the implementation of "saccharide reduction" in food and beverage compositions. According to the instrumental analysis method of the Food Sanitation Act, 'saccharide' means the sum of monosaccharides and disaccharides present in food, and the monosaccharides include fructose and glucose and the disaccharides include sugar, maltose and lactose. In order to achieve the above-described saccharide reduction in food and beverage, it is particularly inevitable to substitute sugar.

Sugar is one of the representative sweeteners that have sucrose as its main component and is added to food to give it a sweet taste. Since sugar has excellent sweetness, it has been added to various foods and processed foods since the past, and has been regarded as the most preferred sweetener that enhances the taste of food and enhances appetite. However, recently, problems have been raised as the harmfulness of sugar continues to be revealed. Specifically, excessive intake of sugar is pointed out as a major cause of various lifestyle diseases such as obesity and diabetes, as well as tooth decay, and the need to develop sweeteners capable of replacing it is emerging worldwide. Recently, various sweetening materials have been developed, but in consideration of sweetness degree and sweetness quality, various functional materials are commercialized with mixing with sugar and dietary fiber.

Allulose, which is used as a sweetener replacing sugar, is C3 epimer of fructose, has a sweetness degree of 70% equivalent to fructose, and is a functional sugar having regulation of blood sugar, prevention of tooth decay, and inhibition of fat synthesis in the liver. Sugar alcohols, which are widely used as sugar substitute sweeteners, have side effects such as causing diarrhea when it is consumed more than a certain amount. However, allulose has no known side effects. Therefore, there is a growing interest in allulose as a sweetener.

Patent document 1 (= JP 2014 113059 A) discloses milk coffee compositions comprising 12.0 mass% milk, 50.0 mass% coffee extract, 5.0 mass% sugar and varying amounts of a syrup containing allulose.

Patent document 2 (= JP 2015 136309 A) discloses coffee compositions comprising quinic acid in a concentration of approx. 500 to 1700 µg/ml.

### [Disclosure]

### [Technical Problem]

An object of the present invention is to provide a coffee milk beverage composition containing allulose and a method for producing the same.

### [Technical Solution]

The present invention as defined in the appended claims relates to a coffee milk beverage composition containing allulose and a method for producing the same, and in particular, a composition capable of improving physical properties or sensory properties due to the combination of coffee and allulose containing a specific content of quinic acid and caffeine, and a method for producing the same.

The present invention provides a coffee milk beverage composition containing coffee bean extract, milk and allulose.

In the present invention, the term 'coffee milk beverage' refers to a processed coffee bean or those to which food or food additives are added, and a beverage including at least one from roasted coffee (roasted coffee beans or its pulverized product), instant coffee (a dried product of soluble extract of roasted coffee), formulated coffee, and liquid coffee, at 1 to 8 % by weight, or preferably 4 to 7 % by weight of a solid content (non-fat milk solid) of all milk components excluding fat, based on 100% by weight of the total coffee milk beverage composition. The all milk components excluding the fat may include proteins including casein, minerals including calcium and phosphate, and vitamins, and are not limited thereto as long as they are typically included in milk.

The coffee bean extract contained in the coffee milk beverage composition contains a quinic acid concentration of 200 to 400 µg/ml, and may contain a caffeine concentration of preferably 250 to 500 µg/ml, or more preferably 400 to 450 µg/ml, in the total coffee milk beverage composition. The concentration ratio of quinic acid (a) / caffeine (b) contained in the coffee milk beverage composition is a/b value of 0.5 to 1.5. The coffee milk beverage composition of the present invention may be excellent in sensory property by including quinic acid and caffeine in the above range.

The present invention provides a coffee milk beverage composition having a/b value of the quinic acid (a)/caffeine (b) concentration ratio of 0.5 to 1.5, and the quinic acid concentration of 200 to 400 µg/ml.

Even if the ratio of quinic acid/caffeine concentration is the same, it may be different in the sweetness, sourness, bitterness, and mouthfeel, depending on the content of quinic acid. Thus, when it has the quinic acid/caffeine concentration ratio and the quinic acid concentration, it is possible to relieve the bitter taste of coffee and to effectively mask bitter taste or metallic taste of allulose, so as to provide a coffee milk beverage having excellent sensory properties.

Quinic acid is a decomposition product of chlorogenic acid, has the structure of following formula (1), and is a water-soluble, colorless crystal. In the present invention, quinic acid is an ingredient that imparts bitter taste and astringent taste to coffee bean extract.

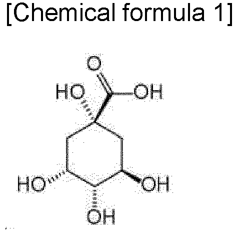

Caffeine is a methylxanthine alkaloid compound having the structure of Formula 2 below, and is one of the purine bases having a white crystal structure. As an ingredient that stimulates the central nervous system, it is an ingredient that gives a bitter taste to the coffee bean extract.

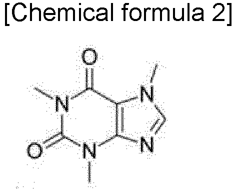

The coffee bean extract contained in the coffee milk beverage composition may be obtained by putting the grounded coffee beans into an extractor for coffee extraction, adding hot water at a temperature of 90 to 100°C to the extractor, extracting it to obtain a coffee extract, and filtering the coffee extract once or twice to produce a liquid extract (coffee bean extract) or a dried extract (dry extract) from the liquid extract. The liquid extract may be used by the extract itself or diluting with a solvent (e.g., water), and the dried extract may be used by the extract itself or diluting with a solvent (e.g., water) to change it into a liquid form.

The coffee beans used in the coffee extract can be at least one selected from the group consisting of Colombia Souprimo, Kenya AA, Brazil Santos, Brazil Séhado, Brazil Santa Lucia, Brazil Yellow Bourbon, Ethiopia Yegachev, Ethiopia Sidamo, Tanzania Kilimanjaro, Costa Rica Tongju, Guatemala Antigua, Guatemala Rainforest Coban, Guatemala Highland Hugh, Hawaiian Kona, Jamaica Blue Mountain, Yemen Mocha, Indonesia Mandeling, and Indonesia Gayo Mountain, but not limited thereto.

The coffee bean extract may be added to include a coffee solid content of 1 to 50% by weight, preferably 5 to 45% by weight, or more preferably 20 to 30% by weight based on 100% by weight of the total coffee milk beverage composition..

The coffee milk beverage composition of the present invention can provide a low-calorie or calorie-free coffee milk beverage composition according to the use of allulose as a sweetener, thereby having advantages of reducing excessive intake of monosaccharides or disaccharides such as glucose, fructose or sugar, and a good preventive effect on adult diseases such as diabetes and obesity, together with high sweetness equivalent to that of sugar. In particular, allulose, unlike sugar, was difficult to be considered as a sweetener that can completely replace sugar, because it exhibits a refreshing sensation or metallic taste in addition to sweetness. However, the beverage composition of the present invention applies allulose to coffee milk beverages and alleviates the bitter taste of coffee and masks the metallic taste, etc. of allulose with the bitter taste and sour taste of coffle milk beverage. It has a low sweetness but high sweetness satisfaction due to the sensory interaction with quinic acid and caffeine in the coffee bean extract, thereby providing a coffee milk beverage with high-quality sweetness.

Allulose contained in the coffee milk beverage composition of the present invention may be in the form of syrup or powder. The coffee milk beverage composition of the present invention contains allulose in 0.1 to 20% by weight, preferably 0.5 to 15% by weight, or more preferably 1 to 10% by weight based on 100% of the total solid content of the coffee milk and beverage composition.

The allulose syrup may be a solution in various concentrations prepared using allulose. For example, the solid content of allulose in the allulose syrup may be in an amount of 10 to 100% by weight, preferably 70 to 99.99% by weight, or more preferably 90 to 99.99% by weight, based on 100% by weight of the allulose syrup. When the allulose powder is used, the solid content of allulose powder includes allulose having a purity of 90% or more, for example, 90 to 99.99% by weight, or more preferably 95 to 99.99% by weight based on the total composition powder.

The allulose syrup may be obtained through separation, purification and concentration processes from the allulose alone or from a mixed saccharides. In an embodiment of the present invention, the allulose syrup obtained by the separation and purification process may have an electrical conductivity of 1 to 50 µS/cm, and may be a liquid allulose syrup having sweetness in colorless or pale yellow.

The allulose may be allulose alone or mixed saccharides containing additional other saccharides, and examples of the mixed saccharides may contain 1 to 99.9% by weight of allulose based on 100% by weight of the solid content of the total mixed saccharides, and it may further include one or more selected from the group consisting of fructose and glucose. When the allulose-containing mixed saccharides include fructose and/or glucose, the mixed saccharides may contain 1 to 90% by weight of fructose and/or 1 to 50% by weight of glucose. Specific examples of the allulose-containing mixed saccharides include 5 to 30 parts by weight of allulose, 20 to 50 parts by weight of fructose and 20 to 55 parts by weight of glucose, and 1 to 10 parts by weight of oligosaccharide based on 100 parts by weight of the total solid content of the mixed saccharides. It may not contain oligosaccharides. The allulose, fructose and glucose are preferably all D-isomers.

Besides allulose, the coffee milk beverage composition may further include one or more saccharides selected from the group consisting of sugar, fructose, starch syrup, glucose, rare sugars excluding allulose, oligosaccharides, sugar alcohols, and dextrins.

The coffee milk beverage composition can be prepared by additionally mixing one or more saccharides selected from the group consisting of high-sweetness sweeteners, maltitol, D-sorbitol, polyglycitol syrup, indigestible maltodextrin, and polydextrose. The one or more saccharides to be mixed additionally may be used by mixing 0.1 to 20% by weight, or preferably 0.1 to 10% by weight, based on 100% by weight of the total solid content of the coffee milk beverage composition.

The one or more saccharides to be further mixed is 0.01 to 20% by weight, preferably 0.1 to 10% by weight, or more preferably 0.1 to 5% by weight, based on 100% of the solid content of the total coffee milk beverage composition, or the additional saccharides may not be included. For example, the coffee milk beverage composition of the present invention may not contain sugar.

The rare sugars excluding allulose may include at least one selected from the group consisting of tagatose, allose, and altrose. In addition, the oligosaccharide refers to a low-viscosity saccharide in which monosaccharides such as glucose, fructose, and galactose are dehydrated and condensed to form a glycoside bond, and about 2 to 5 monosaccharides are connected. The oligosaccharide is a product obtained by processing a saccharide solution obtained from a saccharide-based raw material, and includes fructooligosaccharide, isomaltooligosaccharide, galactooligosaccharide, maltooligosaccharide, xylooligosaccharide, and genthiooligosaccharide. The oligosaccharides can be used according to the starting materials, for examples, maltooligosaccharide or isomaltooligosaccharide obtained from starch-based raw material, galactooligosaccharide obtained from lactose, and fructooligosaccharide obtained from sugar.

The sugar alcohols may be at least one selected from the group consisting of xylitol, maltitol, erythritol, mannitol, lactitol, inositol, and sorbitol. The dietary fiber may be a water-soluble dietary fiber, and the water-soluble dietary fiber may be at least one selected from the group consisting of polydextrose, indigestible maltodextrin, and pectin. The oligosaccharide may be at least one selected from the group consisting of fructooligosaccharide, isomaltooligosaccharide, maltooligosaccharide, and galactooligosaccharide.

The milk contained in the coffee milk beverage composition of the present invention is at least one selected from the group consisting of crude milk, condensed milk, whole milk powder, skim milk powder, skim concentrated milk, low fat milk, non-fat milk, reduced milk, reduced low fat milk and skim milk powder.

The milk may be added so that the solid content of all milk components excluding fat is 1 to 8% by weight, preferably 4 to 7% by weight based on 100% by weight of the total coffee milk beverage composition. For example, 30 to 50% by weight, or preferably 35 to 45% by weight of the raw milk, for example, 8% or more of MSNF, based on 100% by weight of the coffee milk beverage composition may be added.

All milk components excluding fat may include proteins including casein, minerals including calcium and phosphate, and vitamins, and are not limited thereto as long as they are typically included in milk.

The coffee milk beverage composition of the present invention may further include at least one selected from the group consisting of creamer, powdered cream, milk powder, casein salt, fat, vegetable oil, foaming agent, flavoring compound, and buffer salt.

In addition, the coffee milk beverage composition of the present invention may optionally further include at least one selected from the group consisting of a stabilizer, an emulsifier, a sweetener, a pH adjuster, and a coloring agent.

The coffee milk beverage composition of the present invention is accompanied by a Maillard reaction of allulose due to the inclusion of allulose as a saccharide, resulting in more browning color than that containing only sugar, and has an excellent color development effect in the coffee milk beverage composition. Accordingly, without adding a coloring agent, it can produce an excellent level of color development effect in a sensory aspect. Therefore, the coffee milk beverage composition of the present invention may be characterized in that it does not contain a coloring agent.

Stabilizing agents usable in the present invention include at least one selected from the group consisting of gums such as Gellan gum, xanthan gum, carrageenan, guar gum, gum arabic, locust bean gum, celluloses such as CMC (carboxymethyl cellulose), pectin and gelatin, but is not limited thereto.

The emulsifiers usable in the composition is not particularly limited as long as it is an emulsifier usable for food, and for example may be nonionic emulsifiers, cationic emulsifiers, amphoteric emulsifiers, etc. and specifically may be fatty acid esters, preferably lecithin, It may include at least one selected from the group consisting of monoglycerin fatty acid ester, polyglycerin condensed fatty acid ester, and polysorbate-based emulsifier, and preferably sucrose ester of fatty acid (S-1670 and/or S570). The emulsifier may be included in an amount of 0.0001 to 0.5% by weight, or preferably 0.001 to 0.01% by weight, based on 100% by weight of the total composition.

As the pH adjusting agents usable in the present invention, at least one selected from the group consisting of sodium hydrogen carbonate, potassium carbonate, sodium citrate and sodium ascorbate may be used.

As another aspect of the present invention, there is provided a method of preparing a coffee milk beverage composition, comprising mixing coffee bean extract, milk and allulose with water as defined in the appended claims.

The description related to the coffee milk beverage composition may be equally applied to a method of manufacturing a beverage composition.

In addition, the method of preparing a coffee milk beverage composition of the present invention may further include at least one selected from the group consisting of a sterilizing step, a cooling step, a homogenizing step, and a filling step.

The sterilization step can be used non-limiting sterilization method such as low temperature long time method (LTLT), high temperature short time method (HTST) and ultra-high temperature heating method (UHT). In addition, in the cooling step, the sterilized or non-sterilized product may be cooled at a temperature of 5 to 15°C.

### [Effect of Invention]

The present invention as defined in the appended claims relates to a coffee milk beverage composition containing allulose and a method for producing the same, including coffee bean extract, milk and allulose, wherein it can provide the coffee milk beverage composition with a low-calorie coffee milk beverage and sensory properties such as high quality sweetness, by masking the bitter taste or metallic taste peculiar to allulose and simultaneously masking the bitter taste of coffee.

### [Brief description of drawings]

Fig. 1a is a photograph of a coffee milk beverage composition according to the present invention, Fig. 1b is a result of measuring the color value of the coffee milk beverage composition of the present invention.
Fig. 2 shows the sensory evaluation results of the coffee milk beverage compositions (single variety of coffee bean) according to the present invention.
Fig. 3 shows the sensory evaluation results of the coffee milk beverage compositions (two varieties of coffee beans) according to the present invention.

### [Mode for Invention]

The present invention will be described in more detail with reference to the following exemplary examples, but the scope of protection of the present invention is not intended to be limited to the following examples.

### Preparation Example 1. Preparation of allulose syrup

Allulose was prepared by preparing allulose syrup from a fructose substrate by a biological method substantially the same as that described in Korean Patent No. 10-16173797, to obtain allulose syrup with 24-26 (w/w)% allulose and glucose: fructose: allulose: oligosaccharide = 6:67:25:2 at 40 Brix.

In order to remove impurities such as coloring components and ionic components, the obtained allulose syrup was eluted at a rate of twice the volume of the ion exchange resin per hour at room temperature in a column filled with a cation exchange resin, an anion exchange resin, and a resin mixed with cation exchange resin and anion exchange resin. Then, a high-purity allulose fraction was obtained by performing chromatography filled with a calcium (Ca²⁺) type ion exchange resin. The allulose fraction was treated with ion purification and the concentration to prepare allulose syrup composed of 95% by weight of allulose and 5% by weight of fructose based on 100% by weight of the solid content of the syrup composition.

The pH, color value, and electrical conductivity of the allulose syrup having an allulose content of 95% by weight were measured and shown in Table 1 below.

**[Table 1]**

| Assortment | Allulose 95% syrup |
|---|---|
| pH | 4.41 |
| Color value (absorbance, 420nm) | 0.039 |
| Electrical conductivity (ms/cm) | 15.13 |

### Examples 1 to 6: Preparation of a coffee milk beverage composition using a single coffee bean

Coffee beans (Colombia Suprimo, Yiwol Roasters) were pulverized with a hand drip grinder (0.7-1.0mm), 500g of crushed beans were put in a beaker with pouring water at a temperature of 90 to 100°C and left for 5 minutes. After stirring for 10 minutes with an overhead stirrer, coffee bean extract was prepared by vacuum filtration using filter paper 5A.

For preparing coffee milk beverage, the milk (MSNF 8% or more) was heated to 50°C while stirring with an overhead stirrer, and was added by allulose syrup (75bx) prepared in Preparation Example 1 or white sugar (Samyang), together with sodium hydrogen carbonate (carbonate Potassium), sodium caseinate, and an emulsifier (sucrose ester of fatty acid, Samyang Corporation). Then, skim milk powder (MSNF 95% or more, Seoul milk) was added in small portions. Thereafter, the prepared coffee bean extract was added in different amounts as shown in the table below, milk cream (frozen milk cream MF40%) and purified water were added and followed by homogenization process (150 bar) with stirring and sterilization to prepare a coffee milk beverage. In addition, as Comparative Examples 1 and 2, the coffee milk beverages were prepared in the same manner as the coffee milk beverage, but containing white sugar instead of allulose. The coffee milk beverage was prepared with the following ingredients and contents.

**[Table 2]**

| Names of raw materials | Compara tive Example 1 (w/w%) | Example 1* (w/w%) | Example 2* (w/w%) | Example 3 (w/w%) | Example 4 (w/w%) | Example 5* (w/w%) | Example 6* (w/w%) |
|---|---|---|---|---|---|---|---|
| Milk | 40.000 | 40.000 | 40.000 | 40.000 | 40.000 | 40.000 | 40.000 |
| Coffee bean extract(solid content) | 26.100 | 9.000 | 11.600 | 16.000 | 26.100 | 35.000 | 39.400 |
| milk cream | 5.720 | 5.720 | 5.720 | 5.720 | 5.720 | 5.720 | 5.720 |
| White sugar | 5.600 | - | - | - | - | - | - |
| Allulose A100 | - | 6.087 | 6.087 | 6.087 | 6.087 | 6.087 | 6.087 |
| Skimmed milk | 0.852 | 0.852 | 0.852 | 0.852 | 0.852 | 0.852 | 0.852 |
| Sodium hydrogen carbonate (Potassium carbonate) | 0.120 | 0.120 | 0.120 | 0.120 | 0.120 | 0.120 | 0.120 |
| Sodium caseinate | 0.100 | 0.100 | 0.100 | 0.100 | 0.100 | 0.100 | 0.100 |
| Sucrose ester of fatty acid | 0.080 | 0.080 | 0.080 | 0.080 | 0.080 | 0.080 | 0.080 |
| Purified water | 21.128 | 38.041 | 35.441 | 31.041 | 20.941 | 12.041 | 7.641 |
| Sum | 100.000 | 100.000 | 100.000 | 100.000 | 100.000 | 100.000 | 100.000 |

| | | | | | | | |
|---|---|---|---|---|---|---|---|
| (*) Examples not falling within the scope of the present invention | | | | | | | |

### Examples 7 and 8: Preparation of coffee milk beverage composition using mixed coffee beans

The coffee milk beverages were prepared in the same manner as in Examples 1 to 6, but were prepared using mixed beans instead of single beans. It was prepared in the composition ratio of the table below, and the mixed beans were used by mixing Colombia Souprimo and Kenya AA (Iwol Roasters) in a weight ratio of 5:5 and 3:7, respectively. As a Comparative Example, coffee milk beverage was prepared with a composition containing white sugar but not allulose.

**[Table 3]**

| Raw materials | Comparative Example 2 (w/w%) | Example7 (w/w%) | Example8 (w/w%) |
|---|---|---|---|
| Milk | 40.000 | 40.000 | 40.000 |
| Coffee bean extract (Colombia Souprimo and Kenya AA=5:5) | 26.100 | 26.100 | - |
| Coffee bean extract (Colombia Souprimo and Kenya AA=3:7) | - | - | 26.100 |
| milk cream | 5.720 | 5.720 | 5.720 |
| White sugar | 5.600 | - | - |
| Allulose A100 | - | 6.087 | 6.087 |
| Skimmed milk | 0.852 | 0.852 | 0.852 |
| Sodium hydrogen carbonate (Potassium carbonate) | 0.120 | 0.120 | 0.120 |
| Sodium caseinate | 0.100 | 0.100 | 0.100 |
| Sucrose ester of fatty acid (S-570) | 0.030 | 0.030 | 0.030 |
| Sucrose ester of fatty acid (P-1670) | 0.050 | 0.050 | 0.050 |
| Purified water | 21.428 | 20.941 | 20.941 |
| Sum | 100.000 | 100.000 | 100.000 |

### Test Example 1. Physical property evaluation

### 1.1. Ingredient Analysis

The contents of quinic acid contributing to the bitter and astringent taste of coffee, and caffeine contributing to the sour taste of coffee, which were known to have largest effect on sensory function in coffee milk beverage were analyzed by measuring with HPLC. 1 ml of each sample of the bean extracts (Colombia Suprimo and Kenya AA) used in Examples and Comparative Examples was filtered using a 0.45 µm membrane filter, and then quinic acid and caffeine were analyzed under the conditions of Table 4 below, respectively.

**[Table 4]**

| Assortment | Quinic acid | Caffeine |
|---|---|---|
| Column | Aminex 87H column(300 x 7.8mm) | C18(4.6 x 150mm, Eclipse XDE, Agilent USA) |
| Mobile phase | 0.01N H₂SO₄ | 30% MeOH(pH 6.0) |
| Flow rate | 0.5ml/min | 10ml/min |
| Injection Volume | 40°C | 15µl |
| Detection | 10µl | UV-VIS detector, Agilent, Germany(272nm) |

The contents of quinic acid and caffeine in Examples 1 to 8 and Comparative Examples 1 to 2 were calculated using the analyzed values, and shown in Table 5 below.

**[Table 5]**

| Assortment | Quinic acid(ug/ml) | Caffeine(ug/ml ) | Ratio of quinic acid to caffeine |
|---|---|---|---|
| Example1* | 114.20 | 155.24 | 0.7356351 |
| Example2* | 147.18 | 200.08 | 0.7356058 |
| Example3 | 200.48 | 272.53 | 0.7356254 |
| Example4 | 331.17 | 450.18 | 0.7356391 |
| Example5* | 444.09 | 603.70 | 0.7356137 |
| Example6* | 499.92 | 679.59 | 0.73562 |
| Example7 | 295.72 | 417.71 | 0.7079553 |
| Example8 | 281.54 | 404.72 | 0.6956414 |
| Comparative Example 1 | 331.17 | 450.18 | 0.7356391 |
| Comparative Example 2 | 295.72 | 417.71 | 0.7079553 |

| | | | |
|---|---|---|---|
| (*) Examples not falling within the scope of the present invention | | | |

### 1.2. Analysis of solid content, pH and acidity

In general, coffee solid content, pH and acidity, which were known to determine the quality of coffee milk beverage were analyzed.

The solid content of the coffee milk beverages of Examples 1 to 8 and Comparative Examples 1 to 2 was analyzed by Table brix meter (ATAGO), and pH was measured using a pH meter.

**[Table 6]**

| Assortment | Solid content (% by weight) | pH | Acidity (%) |
|---|---|---|---|
| Example 1* | 13.36 | 7.14 | 0.067 |
| Example 2* | 13.61 | 7.04 | 0.066 |
| Example 3 | 13.75 | 6.99 | 0.064 |
| Example 4 | 14.45 | 6.75 | 0.064 |
| Example 5* | 14.88 | 6.65 | 0.063 |
| Example 6* | 15.17 | 6.52 | 0.062 |
| Example 7 | 14.99 | 6.67 | 0.068 |
| Example 8 | 14.45 | 6.70 | 0.069 |
| Comparative Example 1 | 15.35 | 6.55 | 0.062 |
| Comparative Example 2 | 14.04 | 6.74 | 0.064 |

| | | | |
|---|---|---|---|
| (*) Examples not falling within the scope of the present invention | | | |

As can be seen from the above results, the pH was lowered as the quinic acid and caffeine contents increased, and the solid content of coffee according to the change of quinic acid and caffeine contents did not change significantly, even when two or more types of beans are mixed It was confirmed that there was no change in solid content and pH.

### 1.3. Color value analysis

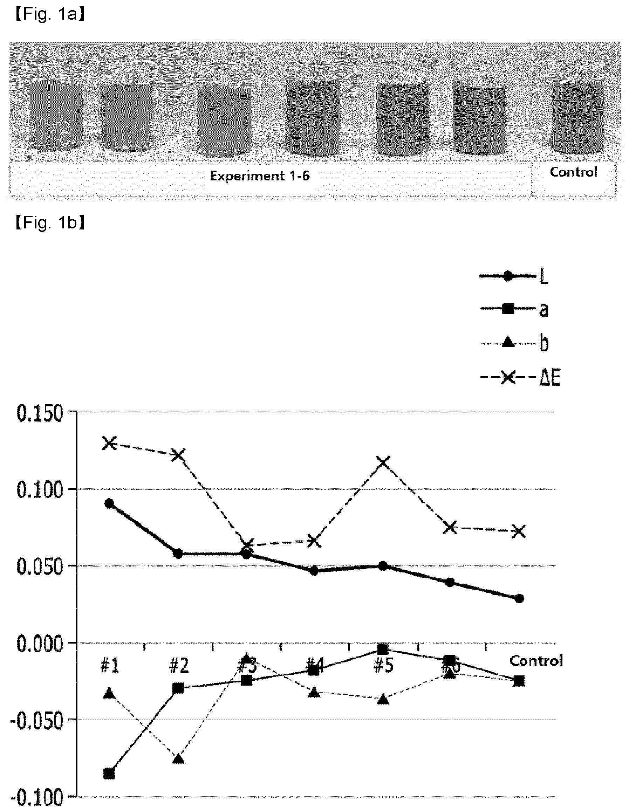

The color values of the coffee milk beverages of Examples 1 to 6 and Comparative Example 1 were measured. Absorbance was measured at a wavelength of 420 nm using a UV Spectrophotometer. The concentration of the measurement sample was 30bx, and was analyzed using a 10cm quartz cell. 420nm is a wavelength that measures yellowness. Higher values are closer to yellow and lower values are closer to transparent color. The measured results are shown in Figs 1A and 1B.

As can be seen from the above results, in the case of using a single bean, b value indicating yellowness tended to increase irregularly as the contents of quinic acid and caffeine increased to the content of allulose syrup, and a value indicating redness showed an increasing pattern constantly. It was confirmed that the color of the coffee milk beverage became darkened.

### Test Example 2. Sensory evaluation

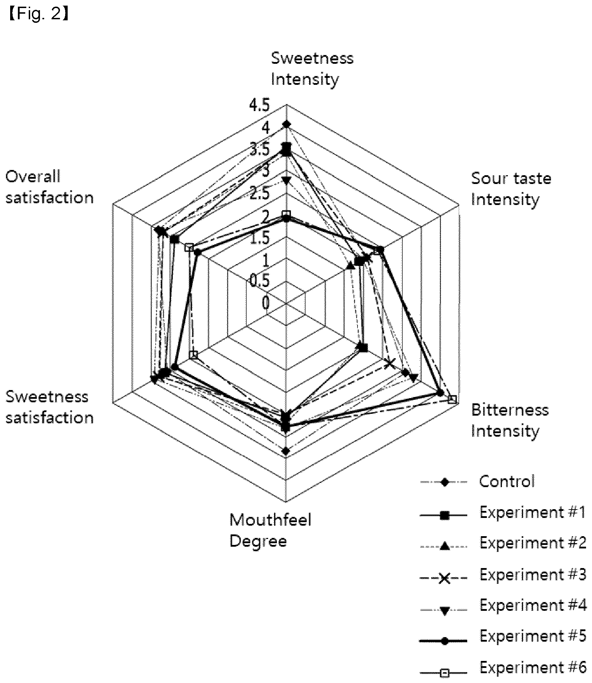

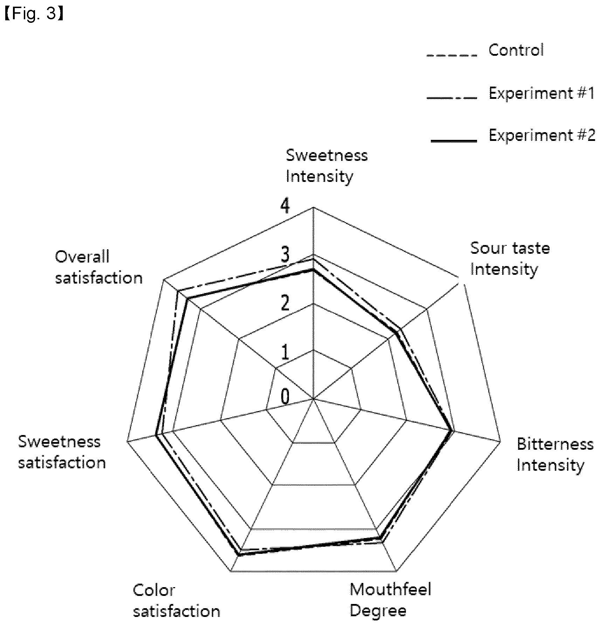

In the coffee milk beverages prepared with the compositions of Examples 1 to 8 and Comparative Examples 1 and 2, six evaluation items of sweetness, sourness, bitterness, mouthfeel, color satisfaction, and sweetness satisfaction were evaluated according to the following evaluation criteria. The sensory evaluation was performed on 14 male and female panelists in their 20s and 50s using a 5-point scale. Among the above results, the evaluation results of the Examples are shown in Tables 7 and FIG 2, and the results of the Comparative Examples are shown in Tables 8 and FIG 3.

### [Evaluation criteria]

Sweet taste: No sweetness (0 points)- very high sweet taste (5 points)
Sour taste: No sour taste (0 points)- very high sour taste (5 points)
Bitter taste: No bitter taste at all (0 points)- very high bitter taste (5 points)
Mouthfeel: No mouthfeel (0 points)-very high mouthfeel feeling (5 points)
Color Satisfaction: Both the color and sweetness are the same as the overall satisfaction level.
Sweetness satisfaction: Not very satisfactory (0 points)-Very satisfactory (5 points)

**[Table 7]**

| Assortment | Example 1* | Example 2* | Example3 | Example4 | Example 5* | Example 6* | Example 7 | Example 8 |
|---|---|---|---|---|---|---|---|---|
| Sweet taste | 3.5 | 3.4 | 3.5 | 2.8 | 1.9 | 2.0 | 2.9 | 2.7 |
| Sour taste | 1.9 | 1.7 | 2.1 | 2.0 | 2.5 | 2.4 | 2.3 | 2.2 |
| Bitter taste | 2 | 1.9 | 2.7 | 3.3 | 4.0 | 4.6 | 2.9 | 2.9 |
| Mouthfeel | 2.6 | 2.7 | 2.5 | 2.8 | 2.8 | 2.8 | 3.3 | 3.2 |
| Color satisfaction | 2.2 | 2.6 | 3.0 | 3.6 | 2.8 | 2.8 | 3.5 | 3.6 |
| Sweetness satisfaction | 3.2 | 3.4 | 3.3 | 3.4 | 2.9 | 2.4 | 3.3 | 3.4 |
| Overall satisfaction | 2.9 | 3.2 | 3.2 | 3.3 | 2.3 | 2.5 | 3.6 | 3.4 |

| | | | | | | | | |
|---|---|---|---|---|---|---|---|---|
| (*) Examples not falling within the scope of the present invention | | | | | | | | |

**[Table 8]**

| Assortment | Comparative Example 1 | Comparative Example 2 |
|---|---|---|
| Sweet taste | 4 | 3.3 |
| Sour taste | 2.1 | 2.3 |
| Bitter taste | 3.1 | 2.8 |
| Mouthfeel | 3.3 | 3.4 |
| Color satisfaction | 3.5 | 3.5 |
| Sweetness satisfaction | 2.9 | 3.0 |
| Overall satisfaction | 3.3 | 3.5 |

As can be seen from the above results, the sour taste and the bitter taste increased with increasing the contents of quinic acid and caffeine, and Examples 2 to 4 had lower sweetness degrees compared to the Comparative Example containing sugar, but remarkably excellent overall satisfaction. **In** addition, it was confirmed that Example 4 was the highest color satisfaction. **In** addition, in case that the mixed beans were used, the beverage containing allulose syrup (Examples 7 and 8) had lower sweetness degrees than that of Comparative Example 2 containing sugar, but high satisfaction.

Therefore, when the quinic acid of the bean extract is 330 to 350 µg/ml and the caffeine is 400 to 450 µg/ml based on about 6 (w/w%) (% by weight of allulose solid content, 75bx) of allulose syrup, the sensory properties were confirmed to be the best.

## Claims

1. A coffee milk beverage composition comprising coffee bean extract, milk and allulose, wherein the allulose is 0.1 to 20% by weight based on 100% by weight of solids content of the total coffee milk beverage composition, wherein the solid content of all milk components excluding fat is contained at an amount of 1 to 8% by weight based on 100% by weight of the total coffee milk beverage composition, wherein the coffee bean extract is added so that a quinic acid concentration is 200 to 400 µg/ml, and wherein a ratio of quinic acid concentration to caffeine concentration is 0.5 to 1.5 in the coffee milk beverage composition.

2. The coffee milk beverage composition of claim 1, wherein the caffeine concentration in the coffee milk beverage composition is 400 to 450 µg/ml.

3. The coffee milk beverage composition of claim 1, wherein the allulose is added in the form of syrup or powder.

4. The coffee milk beverage composition of claim 3, wherein the allulose is added as an allulose syrup having an allulose solid content of 70 to 99.99% by weight based on 100% by weight of the allulose syrup.

5. The coffee milk beverage composition of claim 3, wherein the allulose is added as an allulose syrup having an electrical conductivity of 1 to 50 µS/cm.

6. The coffee milk beverage composition of claim 1, where the milk is at least one selected from the group consisting of crude milk, condensed milk, whole milk powder, skim milk powder, skim condensed milk, low-fat milk, non-fat milk, reduced milk, reduced low-fat milk and skim milk powder.

7. The coffee milk beverage composition of claim 1, wherein the coffee milk beverage composition is prepared by further mixing one or more saccharides selected from the group consisting of rare sugars excluding allulose, fructose, starch syrup, glucose, oligosaccharides, sugar alcohols, and dextrins.

8. The coffee milk beverage composition of claim 1, wherein the coffee milk beverage composition does not contain sugar.

9. The coffee milk beverage composition of claim 1, wherein the coffee milk beverage composition does not contain a coloring agent.

10. A method of preparing a coffee milk beverage composition, containing mixing coffee bean extract, milk and allulose with water, wherein the allulose is 0.1 to 20% by weight based on 100% by weight of solids content of the total coffee milk beverage composition, wherein the solid content of all milk components excluding fat is contained at an amount of 1 to 8% by weight based on 100% by weight of the total coffee milk beverage composition, wherein the coffee bean extract is added so that a quinic acid concentration is 200 to 400 µg/ml , and wherein a ratio of quinic acid concentration to caffeine concentration is 0.5 to 1.5 in the coffee milk beverage composition.

## Patentansprüche

1. Kaffee-Milch-Getränkezusammensetzung, die Kaffeebohnenextrakt, Milch und Allulose umfasst, wobei die Allulose 0,1 bis 20 Gew.-%, bezogen auf 100 Gew.% Feststoffgehalt der gesamten Kaffee-Milch-Getränkezusammensetzung ausmacht, wobei der Feststoffgehalt aller Milchbestandteile außer Fett in einer Menge von 1 bis 8 Gew.-%, bezogen auf 100 Gew.-% der gesamten Kaffee-Milch-Getränkezusammensetzung, enthalten ist, wobei das Kaffeebohnenextrakt hinzugegeben wird, dass eine Chinasäurekonzentration in der Kaffee-Milch-Getränkezusammensetzung 200 bis 400 µg/ml beträgt, und wobei ein Verhältnis der Chinasäurekonzentration zu der Koffeinkonzentration in der Kaffee-Milch-Getränkezusammensetzung 0,5 bis 1,5 beträgt.

2. Kaffee-Milch-Getränkezusammensetzung nach Anspruch 1, wobei die Koffeinkonzentration in der Kaffee-Milch-Getränkezusammensetzung 400 bis 450 µg/ml beträgt.

3. Kaffee-Milch-Getränkezusammensetzung nach Anspruch 1, wobei die Allulose in Form von Sirup oder Pulver zugegeben wird.

4. Kaffee-Milch-Getränkezusammensetzung gemäß Anspruch 3, wobei die Allulose in Form eines Allulose-Sirups mit einem Allulose-Feststoffgehalt von 70 bis 99,99 Gew.-%, bezogen auf 100 Gew.-% des Allulose-Sirups, zugegeben wird.

5. Kaffee-Milch-Getränkezusammensetzung gemäß Anspruch 3, wobei die Allulose in Form eines Allulose-Sirups mit einer elektrischen Leitfähigkeit von 1 bis 50 µS/cm zugegeben wird.

6. Kaffee-Milch-Getränkezusammensetzung nach Anspruch 1, wobei die Milch mindestens eine ist, die aus der Gruppe ausgewählt ist, die aus Rohmilch, Kondensmilch, Vollmilchpulver, Magermilchpulver, Magerkondensmilch, fettarmer Milch, fettfreier Milch, reduzierter Milch, reduzierter fettarmer Milch und Magermilchpulver besteht.

7. Kaffee-Milch-Getränkezusammensetzung nach Anspruch 1, wobei die Kaffee-Milch-Getränkezusammensetzung durch weiteres Zumischen eines oder mehrerer Saccharide, das bzw. die aus der Gruppe ausgewählt ist bzw. sind, die aus seltenen Zuckern, ausgenommen Allulose, Fructose, Stärkesirup, Glucose, Oligosacchariden, Zuckeralkoholen und Dextrinen besteht, hergestellt wird.

8. Kaffee-Milch-Getränkezusammensetzung nach Anspruch 1, wobei die Kaffee-Milch-Getränkezusammensetzung keinen Speisezucker enthält.

9. Kaffee-Milch-Getränkezusammensetzung nach Anspruch 1, wobei die Kaffee-Milch-Getränkezusammensetzung keinen Farbstoff enthält.

10. Verfahren zur Herstellung einer Kaffee-Milch-Getränkezusammensetzung, umfassend das Mischen von Kaffeebohnenextrakt, Milch und Allulose mit Wasser, wobei die Allulose 0,1 bis 20 Gew.-%, bezogen auf 100 Gew.-% Feststoffgehalt der gesamten Kaffee-Milch-Getränkezusammensetzung ausmacht, wobei der Feststoffgehalt aller Milchbestandteile außer Fett in einer Menge von 1 bis 8 Gew.-%, bezogen auf 100 Gew.-% der gesamten Kaffee-Milch-Getränkezusammensetzung, enthalten ist, wobei das Kaffeebohnenextrakt hinzugegeben wird, so dass eine Chinasäurekonzentration in der Kaffee-Milch-Getränkezusammensetzung 200 bis 400 µg/ml beträgt, und wobei ein Verhältnis der Chinasäurekonzentration zu der Koffeinkonzentration in der Kaffee-Milch-Getränkezusammensetzung 0,5 bis 1,5 beträgt.

## Revendications

1. Composition d'une boisson au café et au lait comprenant un extrait de grains de café, du lait et de l'allulose, dans laquelle l'allulose est de 0,1 à 20 % en poids sur la base de 100 % en poids de teneurs en matières solides de la composition d'une boisson au café et au lait totale, dans laquelle la teneur en matières solides de tous les composants lactés à l'exclusion de la matière grasse est contenue en une quantité de 1 à 8 % en poids sur la base de 100 % en poids de la composition d'une boisson au café et au lait totale, dans laquelle l'extrait de grains de café est ajouté de telle sorte qu'une concentration en acide quinique est de 200 à 400 µg/ml, et dans laquelle un rapport de la concentration en acide quinique à la concentration en caféine est de 0,5 à 1,5 dans la composition d'une boisson au café et au lait.

2. Composition d'une boisson au café et au lait selon la revendication 1, dans laquelle la concentration en caféine dans la composition d'une boisson au café et au lait est de 400 à 450 µg/ml.

3. Composition d'une boisson au café et au lait selon la revendication 1, dans laquelle l'allulose est ajoutée sous forme de sirop ou de poudre.

4. Composition d'une boisson au café et au lait selon la revendication 3, dans laquelle l'allulose est ajouté sous forme de sirop d'allulose ayant une teneur en matières solides d'allulose de 70 à 99,99 % en poids sur la base de 100 % en poids du sirop d'allulose.

5. Composition d'une boisson au café et au lait selon la revendication 3, dans laquelle l'allulose est ajouté sous forme de sirop d'allulose ayant une conductivité électrique de 1 à 50 µS/cm.

6. Composition d'une boisson au café et au lait selon la revendication 1, dans laquelle le lait est au moins un lait choisi dans le groupe constitué par le lait cru, le lait concentré, le lait entier en poudre, le lait écrémé en poudre, le lait concentré écrémé, le lait faible en matières grasses, le lait dégraissé, le lait réduit, le lait faible en matières grasses réduit et le lait écrémé en poudre.

7. Composition d'une boisson au café et au lait selon la revendication 1, dans laquelle la composition d'une boisson au café et au lait est préparée en mélangeant en outre un ou plusieurs saccharides choisis dans le groupe constitué par les sucres rares à l'exclusion de l'allulose, le fructose, le sirop d'amidon, le glucose, les oligosaccharides, les alcools de sucre et les dextrines.

8. Composition d'une boisson au café et au lait selon la revendication 1, dans laquelle la composition d'une boisson au café et au lait ne contient pas de sucre.

9. Composition d'une boisson au café et au lait selon la revendication 1, dans laquelle la composition d'une boisson au café et au lait ne contient pas d'agent colorant.

10. Procédé de préparation d'une composition d'une boisson au café et au lait, contenant le mélange d'un extrait de grains de café, de lait et d'allulose avec de l'eau, dans lequel l'allulose est de 0,1 à 20 % en poids sur la base de 100 % en poids de teneurs en matières solides de la composition d'une boisson au café et au lait totale, dans lequel la teneur en matières solides de tous les composants lactés à l'exclusion de la matière grasse est contenue en une quantité de 1 à 8 % en poids sur la base de 100 % en poids de la composition d'une boisson au café et au lait totale, dans lequel l'extrait de grains de café est ajouté de telle sorte qu'une concentration en acide quinique est de 200 à 400 µg/ml, et dans lequel un rapport de la concentration en acide quinique à la concentration en caféine est de 0,5 à 1,5 dans la composition d'une boisson au café et au lait.
